Europäisches Patentamt

European Patent Office

Office européen des brevets

(11) Publication number: **0 135 627**
A1

# EUROPEAN PATENT APPLICATION

(21) Application number: 83305703.7

(22) Date of filing: 23.09.83

(51) Int. Cl.⁴: **B 01 D 23/10,** B 01 D 23/24

(43) Date of publication of application: 03.04.85
Bulletin 85/14

(84) Designated Contracting States: BE DE FR GB IT NL SE

(71) Applicant: AMSTED Industries Incorporated,
3700 Prudential Plaza, Chicago, IL. 60601 (US)

(72) Inventor: Wykoff, Richard H. c/o AMSTED INDUSTRIES,
INCORPORATED 3700 Prudential Plaza, Chicago
Illinois 60601 (US)

(74) Representative: Boyes, Kenneth Aubrey et al, Frank B.
Dehn & Co. Imperial House 15-19 Kingsway, London
WC2B 6UZ (GB)

(54) Filtering system.

(57) In a filtering system (10) a liquid containing suspended pollutants is pumped into a top inlet (14) of a filter vessel (20) containing a granular filter media (22) formed in a bed (24). As the liquid flows through the bed (24), the pollutants are entrapped by the media allowing the liquid to be discharged through a bottom outlet (30) in a purified condition. Upon the filter media (22) becoming saturated with the pollutants, the media is rejuvenated in a two stage procedure. During the first stage, the media (22), entrapped polutants and liquid are formed into slurry by pumping such at a higher rate in a closed loop path so that the pollutants and filter media are separated. In the second stage, the pumping rate is reduced allowing the filter media (22) to reaccumulate in the vessel (20) while the entrapped pollutants and liquid continue to circulate and be selectively drawn off through a top outlet (46) in the vessel.

8V142-704

### Filtering System

This invention relates to a method of filtering and to apparatus by which the method may be caried out. More particularly, this method and apparatus form a system allowing the use of a deep bed of granular filter media to separate and collect pollutants from a liquid flow such as suspended matter in a liquid suspension and further allow the bed to be rejuvenated upon becoming saturated with pollutants.

The use of a thick bed of a granular filter media, for example sand, to separate suspended pollutants in a liquid flow, is well known. The polluted liquid or liquid suspension may be pumped above the sand bed and by gravity allowed to flow through the bed. The pollutants or suspended matter in the liquid flow become entrapped in the interstices of the granular media while the liquid continues through the bed for discharge in a purified state.

When the filter media becomes sufficiently saturated or fouled with pollutants, a common procedure of filter media rejuvenation is to backwash the media. In its most simple form, backwashing may be accomplished by providing a flow of clean liquid through the media in a reverse, or in this case upward, direction to separate the entrapped pollutants. The separated pollutants and backwash liquid then may be conveniently disposed of in a municipal sewage system, for example.

Various other methods and means have been utilized to promote improved filter media rejuvenation. For example, rotatable back flushing headers have been embedded in the bed of filter media. Another example of backwashing means was to place elongated pipes within the filter media at various levels.

Still another method of filter media rejuvenation is to form a slurry of the filter media liquid and entrapped pollutants. The slurry then may be pumped to a holding tank having a perforated wall through which the liquid and pollutants may pass. Once this separation process has been completed, the filter media may be mixed with clean liquid and returned to the filter.

In a further method of filter media rejuvenation, a slurry is formed of the filter media, entrapped pollutants and liquid which then is pumped past a perforated screen. The size of the perforations is such that the pollutants and liquid will pas through the perforations but the filter media will not. The filter media may then be returned to the filter to reform the filter bed. A method and apparatus for performing such is decsribed in U.S. Patent No. 3,550,774.

According to the invention there is provided a method of filtering suspended matter from a liquid suspension by means of a vessel containing a bed of granular filter media, said method comprising: flowing·said liquid suspension into said vessel and through said filter media at a selected rate whereby said liquid suspension is filtered and said suspended matter is collected by said filter media, and discharging said filtered liquid from said vessel; intermittently ceasing the flow of said liquid suspension and the discharge of said filtered liquid into and from said vessel, flowing the liquid suspension remaining in said vessel at an increased flow rate whereby said filter media is circulated in a turbulent manner such that collected suspended matter is separated therefrom and is mixed with said liquid to form a slurry, and circulating said slurry at the increased rate of flow until at least a major part of the collected matter is separated from said filter media and mixed into said slurry; thereafter reducing the rate of flow of said slurry to a rate at which said filter media is maintained in an expanded state within said vessel while occupying less than the volume thereof, introducing additional liquid suspension into said vessel and removing a portion of said slurry which includes liquid suspension and suspended matter separated from the filter media from said vessel until the concentration of the suspended separated matter and said added liquid suspension in the slurry reaches a selected value; and thereafter reinstating the original flow of said liquid suspension at said original rate through said filter media and discharging said filtered liquid from said vessel.

A preferred filtering system of this invention includes a filter vessel containing a granular filter media formed in a bed located in a lower portion of the vessel. When the system is in an operative mode, the vessel receives a flow of polluted liquid through a top inlet. As the polluted liquid flows downwardly through the filter media, pollutants in the liquid are entrapped in the interstices formed in the filter bed. The liquid with substantially all of the polutants removed flows from the vessel by means of a bottom outlet.

When the bed becomes sufficiently saturated or fouled with pollutants, it must be rejuvenated if efficient operation is to continue.

By appropriate valving, the system is placed in a rejuvenation mode. The flow of liquid to and from the vessel is stopped. In the preferred embodiment a slurry pump having its discharge connected to a bottom inlet in the vessel and its intake connected to the top vessel inlet is then activated. The pump has sufficient pumping capacity to form a slurry of the liquid in the vessel, filter media and entrapped pollutants. The slurry is pumped in a turbulent manner in a closed looped path formed in part by the vessel and the pump.

The turbulent flow separates the entrapped pollutants from the filter media and into suspension

- 4 -

in the liquid. The pumping volume through the slurry pump is then reduced. At this reduced volume, the filter media reaccumulates in the vessel while the liquid and entrapped pollutants form a backwash liquid which continues to circulate. A valve connected to a top outlet in the vessel is then opened allowing the backwash liquid to discharge. At the same time, the flow of polluted liquid is again commenced at a rate proximating the backwash liquid discharge rate.

Discharge of the backwash liquid continues until the concentration of pollutants in the backwash liquid proximates that of the polluted liquid. The slurry pump is then de-energized and by the appropriate valving, the system is returned to its operative mode.

The invention extends to apparatus for carrying out the method outlined above.

At least in a preferred embodiment the inventive filtering system has several advantages over other known systems.

First, the apparatus and method of this sytem provide highly efficient filtering and filter bed rejuvenaton with a minimum amount of equipment.

Secondly, during the filter bed rejuvenation, maximum filter media - entrapped pollutant separation is achieved by repeated turbulent flow through the slurry pump as provided by the closed loop flow path of the slurry.

Lastly, the filter bed rejuvenation of this sytem is accomplished without the use of an external separation device such as the perforated tank wall or screen noted earlier. Because of the difficult and frequent maintenance required to clean the perforated surfaces in such separation, a filtering system without such is particularly desirable.

A preferred embodiment of the invention will now be described, by way of example only, with reference to the accompanying drawings, wherein:

Fig. 1 is an elevational view, in partial section, of the filtering system of an embodiment of this invention depicted in an operative mode;

Fig. 2 is an elevational view of the filtering system of Fig. 1 depicted in a first stage of a rejuvenation mode, and

Fig. 3 is an elevational view of the filtering system of Fig. 1 depicted in a second stage of the rejuvenation mode.

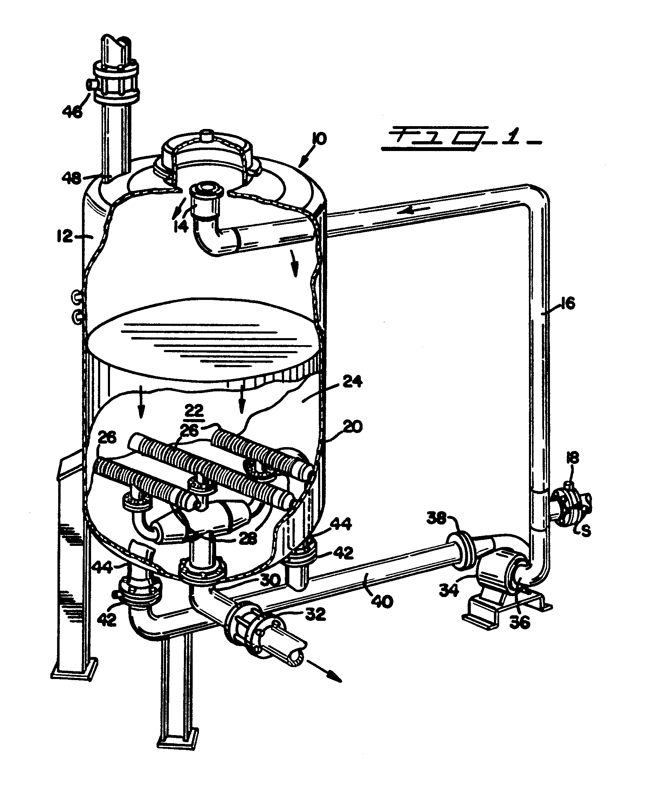

A filtering system according to one embodiment of this invention is shown generally in Figs. 1, 2 and 3 and designated 10.

The system 10 includes a vessel 12 having a top inlet port 14 connected to a source S of a polluted liquid, such as a liquid suspension containing suspended solids or pollutants, by means of an inlet pipe 16. In an operative mode as seen in Fig. 1, a flow of the polluted liquid from the source S to the vessel 12 is controlled by a liquid supply valve 18.

Within a lower portion 20 of the vessel 12 is a granular filter media 22 forming a bed 24 through which the polluted liquid flows downwardly from the inlet 14. Within the bed 24 is a series of pipes 26 having a plurality of annular slots 28. The slots 28 are spaced apart a dimension less than a diameter of the filter media 22, thus preventing a discharge of the media 22 as the liquid in a cleaned or purified condition flows from a bottom outlet port 30. A liquid discharge valve 32 is connected with the bottom outlet 30 to allow control of the flow from the outlet 30.

Filtering may continue until the bed 24 of the filter media 22 becomes sufficiently fouled or saturated that the flow rate through the bed 24 becomes inefficient. This reduced flow rate through the bed 24 occurs because interstices between the grains of filter media 22 become filled with entrapped pollutants or solids. As this saturation continues to increase, pressure in the pipe 16 also increases. When the pressure reaches a particular level, the filtering is stopped and the bed 24 of the filter media 22 is rejuvenated.

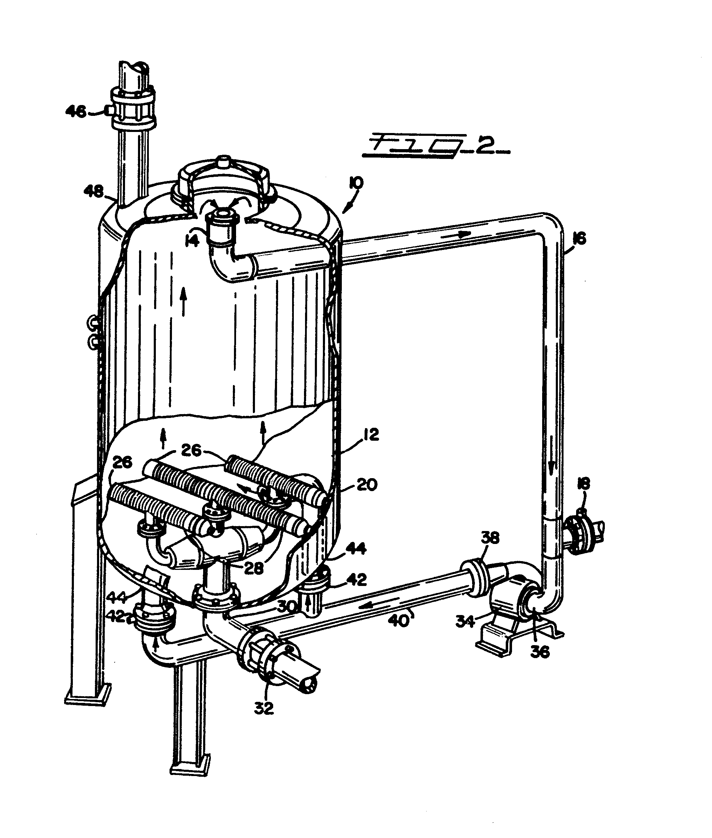

Rejuvenation is accomplished in two stages. The first stage may be best understood by reference to Fig. 2. First, flow to and from the system 10 is stopped by closing the valves 18 and 32. Next, a slurry pump 34 is energized. The pump 34 has an intake 36 connected to the inlet pipe 16 and to the liquid supply valve 18. A discharge 38 of the pump 34 in turn is connected to slurry inlet valves 42 by a header 40 which in turn connects with a pair of bottom inlet ports 44 in the vessel 12.

The pump 34 forces the liquid, under high pressure, through the ports 44 and into the bed 24. The upward flow of the liquid expands the bed causing a release of the entrapped pollutants. The pumping rate of the pump 34 is sufficient to form a slurry comprising the filter media, liquid and entrapped pollutants which flow through the inlet 14 and the pipe 16 and to the pump 34. Because the flow path of the slurry is a closed loop, it is subjected to repeated circulation through the pump 34 which insures that the pollutants are separated from the filter media 22 and into suspension in the liquid. The time period for first stage rejuvenation will depend extensively on the characteristics of the entrapped pollutants and may vary between 1 to 3 minutes, for example.

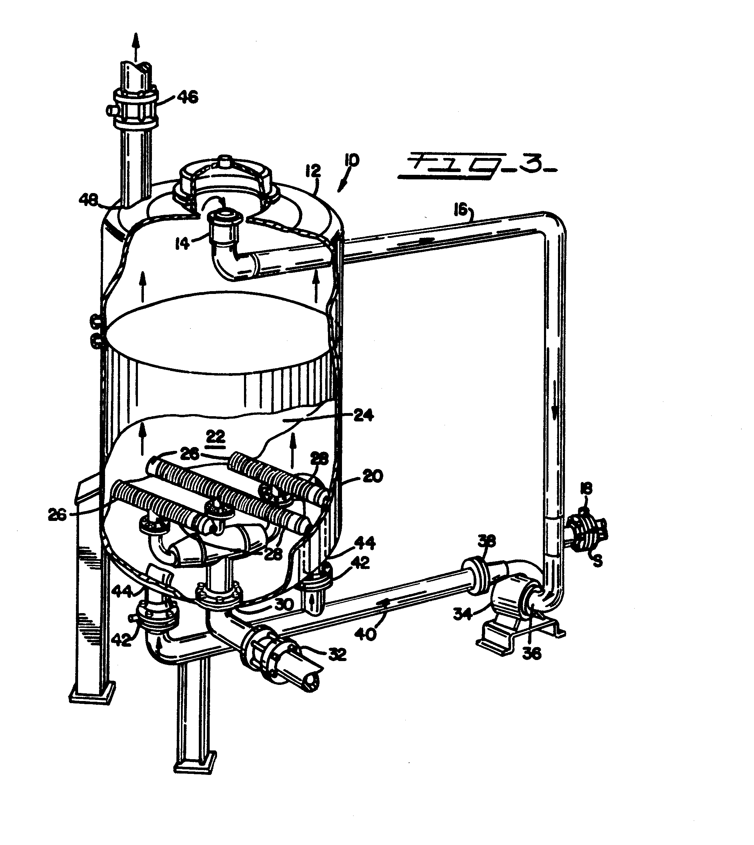

Once good filter media - entrapped pollutant separation has been achieved, rejuvenation may proceed to a second stage. As may be best understood by viewing Fig. 3, during the second stage the pumping rate through the pump 34 is reduced. This rate reduction may proximate 15-25 percent of that
of the first stage.  At this reduced rate, the
filter media 22 in the slurry reaccumulates in
the vessel 12 forming a backwash liquid flow.
The bed 24, however, remains expanded because of
the upward backwash liquid flow through the lower ,
portion 20 of the vessel 12.  The upward flow is
not of a sufficient rate to carry the filter media
22 to the inlet 14 so as to provide further circulation.
The reduced flow rate may be achieved by slowing
the pump 34 or by restricting the flow with the
valves 42, for example.

A backwash discharge valve 46 connected to
a top outlet port 48 is then opened to allow a
draw off of the backwash liquid.  Concurrently with the
opening of the valve 46, the supply valve 18 is
also opened to allow the polluted liquid from the
source S to replace the amount of the backwash
liquid discharged through the valve 46.  When the
concentration of pollutants in the backwash liquid
decreases to a point where it proximates the concentration of pollutants in the polluted liquid, the second
stage of rejuvenation is complete.

The system 10 may now be returned to the
operational mode.  To accomplish this return, the
valves 42 and 46 first are closed and the slurry
pump 34 de-energized.  The valves 18 and 32 then
are placed in a fully open condition.  As the polluted
liquid again flows downward through the vessel
12, the filter media 22 is reformed in the bed
24 to provide an effective filter means to separate
and entrap the pollutants in the liquid.

Claims

1.     A method of filtering suspended matter from a liquid suspension by means of a vessel containing a bed of granular filter media, said method comprising: flowing said liquid suspension into said vessel and through said filter media at a selected rate whereby said liquid suspension is filtered and said suspended matter is collected by said filter media, and discharging said filtered liquid from said vessel; intermittently ceasing the flow of said liquid suspension and the discharge of said filtered liquid into and from said vessel, flowing the liquid suspension remaining in said vessel at an increased flow rate whereby said filter media is circulated in a turbulent manner such that collected suspended matter is separated therefrom and is mixed with said liquid to form a slurry, and circulating said slurry at the increased rate of flow until at least a major part of the collected matter is separated from said filter media and mixed into said slurry;   thereafter reducing the rate of flow of said slurry to a rate at which said filter media is maintained in an expanded state within said vessel while occupying less than the volume thereof, introducing additional liquid suspension into said vessel and removing a portion of said slurry which includes liquid suspension and suspended matter separated from the filter media from said vessel until the concentration of the suspended separated matter and said added liquid suspension in the slurry reaches a selected value; and thereafter reinstating the original flow of said liquid suspension at said original rate through said filter media and discharging said filtered liquid from said vessel.

2.     A method as claimed in claim 1 wherein the liquid suspension and said filter media along with said slurry are circulated outside the vessel at said increased rate of flow.

3.    A method as claimed in claim 1 or 2 wherein said selected concentration of said added liquid suspension and said slurry is substantially equal to the concentration of said liquid suspension.

4.    A method as claimed in claim 1 2, or 3 wherein said portion of said slurry is removed at substantially the same rate as said liquid suspension flowed into said vessel.

5.    A method as claimed in any preceding claim wherein said liquid suspension is flowed at said selective rate of flow downwardly through said filter media.

6.    A method as claimed in any preceding claim wherein at the increased flow rate the remaining liquid suspension and said slurry are circulated upwardly through said filter media.

7.    A method as claimed in claim 6 wherein said portion of said slurry including said liquid suspension and said suspended separated matter are removed from the top of said vessel and said additional liquid suspension is flowed upwardly through said filter media.

8.    Filtering apparatus for carrying out the method claimed in any preceding claim.

0135627

1/3

FIG.1

0135627

2 / 3

FIG. 2

0135627

FIG-3-

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | DE-A-2 702 972 (KURITA WATER) * Page 8, lines 24-33; pages 9-10; page 11, lines 1-8; page 14, lines 26-32; page 15, lines 1-9 * | 1 | B 01 D 23/10 B 01 D 23/24 |
| A | | 2-8 | |
| | --- | | |
| Y | DE-A-2 432 443 (PACIK DANIEL) * Page 8, lines 19-23 * | 1 | |
| | --- | | |
| A | GB-A-1 136 156 (PERMUTIT) | | |
| | ----- | | |

TECHNICAL FIELDS SEARCHED (Int. Cl. ³)

B 01 D

The present search report has been drawn up for all claims

| Place of search | Date of completion of the search | Examiner |
|---|---|---|
| THE HAGUE | 13-06-1984 | DE PAEPE P.F.J. |